Europäisches Patentamt

European Patent Office

Office européen des brevets

(19)

(11) Veröffentlichungsnummer: **0 385 050**

**A1**

(12) **EUROPÄISCHE PATENTANMELDUNG**

(21) Anmeldenummer: **89810300.7**

(22) Anmeldetag: **24.04.89**

(51) Int. Cl.⁵: **B01D 24/22, B01D 24/46**

(30) Priorität: **02.03.89 CH 779/89**

(43) Veröffentlichungstag der Anmeldung:
**05.09.90 Patentblatt 90/36**

(84) Benannte Vertragsstaaten:
**AT CH DE ES IT LI**

(71) Anmelder: **GEBRÜDER SULZER
AKTIENGESELLSCHAFT
Zürcherstrasse 9
CH-8401 Winterthur(CH)**

(72) Erfinder: **Gnieser, Jürgen
Dachslenstrasse 9
CH-8048 Zürich(CH)**
Erfinder: **Grob, René
Eichenweg 10
CH-8408 Winterthur(CH)**
Erfinder: **Keller, Ernst
Wallrütistrasse 116
CH-8404 Winterthur(CH)**

(54) **Rückspülbare Mehrschicht-Filteranlage.**

(57) Bei einer Mehrschicht-Filteranlage, die mit einem geschlossenen Spülwasser-Reservoir (17) ausgerüstet ist, dient die von einem Gebläse (24) geförderte Spülluft als Antrieb für die notwendigen Spülwasserströmungen. Die Spülluft überlagert dabei das Wasser in dem Spülwasser-Reservoir (17).

Für die Rückspülphase mit einem Luft/Wasser-Gemisch und die anschliessende reine Wasserspülung, die zur Entmischung und Trennung der unterschiedlichen Filtermaterialien (6 bis 8) dient, werden sehr stark verschiedene Luftmengen benötigt. Um diese Unterschiede auf einfache Weise, insbesondere bei der im allgemeinen automatisch ablaufenden Rückspülung, zu beherrschen, sind in der Luftleitung (26) zwischen dem Gebläse (24) und dem Spülwasser-Reservoir (17) zwei parallel zueinander liegende Leitungsabschnitte (27, 28) mit je einem Auf/Zu-Absperrorgan (29, 30) vorhanden. Die Leitungsabschnitte (27, 28) und/oder die Absperrorgane (29, 30) weisen sehr unterschiedliche Strömungsquerschnitte auf, wobei der Strömungsquerschnitt in dem einen Abschnitt (28) nur wenige Prozent desjenigen in dem anderen Abschnitt (27) beträgt.

## Rückspülbare Mehrschicht-Filteranlage

Die Erfindung betrifft eine rückspülbare Mehrschicht-Filteranlage zum Reinigen von Wasser oder Abwasser mit mindestens einem Filterfeld, das auf einem Filterboden körnige Filtermaterialien unterschiedlicher Grösse und Schwere enthält, ferner mit einer Spülvorrichtung zum Rückspülen mit Luft, einem Luft/Wasser-Gemisch und Wasser, und mit einer Druckluftquelle, die den Wasserspiegel eines geschlossenen Spülwasser-Reservoirs belastet, für den Antrieb der Spülwasserströmung.

Rückspülbare Mehrschicht-Filteranlagen sind bekannt (siehe z.B. P. Bruhlhart "Rhone-Wasseraufbereitung für das Werk Monthey der Ciba-Geigy SA" aus "Technische Rundschau Sulzer", Sonderheft ACHEMA 1976, Seite 24-34).

Weiterhin ist es bekannt, zur Einsparung einer Spülwasserpumpe bei rückspülbaren Filteranlagen als Antriebsmittel für das Spülwasser unter Druck stehende Spülluft zu verwenden (DE-PS 11 38 377).

Bei dem ebenfalls bekannten Drei-Phasen-Rückspülverfahren wird während der zweiten Phase mit einem Luft/Wasser-Gemisch gespült, während in der dritten Phase eine reine Wasserspülung erfolgt. Diese dient bei Mehrschicht- Filtern beispielsweise dazu, die beim Rückspülen untereinander vermischten körnigen Filtermaterialien wiederum nach Grösse und Schwere zu trennen und in getrennten Schichten auf dem Filterboden abzulagern. Beim Rückspülen von Mehrschichtfiltern, denen eine Spülwasserpumpe fehlt, haben sich dadurch Schwierigkeiten ergeben, dass der Luftbedarf - wegen der stark verschiedenen Strömungsgeschwindigkeiten des Spülwassers, und damit der Antriebsluft - während der zweiten und der dritten Phase der Rückspülung sehr stark verschieden ist. Er beträgt bei der dritten Phase beispielsweise mindestens das 10-fache, meist jedoch mehr als das 20- oder 30-fache der in der zweiten Phase benötigten Luftmenge.

Aufgabe der Erfindung ist es, eine Filteranlage der eingangs genannten Art zu schaffen, bei der die Zuführung der unterschiedlichen Luftmengen für die Spülwasserströmung während der zweiten und der dritten Phase des im allgemeinen automatisch ablaufenden Rückspülvorganges problemlos gesteuert werden kann. Diese Aufgabe wird mit der Erfindung dadurch gelöst, dass in die Luftleitung zwischen Druckluftquelle und Spülwasser-Reservoir, parallel zueinander, zwei Leitungsabschnitte eingesetzt sind, in denen je ein AUF/ZU-Steuerorgan vorhanden ist, und bei denen der Leitungsquerschnitt des einen Abschnitts ein Vielfaches desjenigen des anderen Abschnitts beträgt.

Durch geeinete Wahl der Querschnitte bzw. der Nennweiten in den Leitungsabschnitten der Luftleitung zum Spülwasser-Reservoir und zusätzlich gegebenenfalls der Durchströmquerschnitte der Auf-/Zu-Steuerorgane, lassen sich die dem Spülwasser-Reservoir zufliessenden Luftmengen während der beiden genannten Rückspülphasen relativ einfach einstellen, so dass die Luftmenge für die Trennphase in einem gewünschten Verhältnis zu derjenigen der Luft/Wasser-Spülphase steht und beispielsweise das 10-, 20- oder 30-fache der während der zweiten Phase benötigten Luftmenge beträgt.

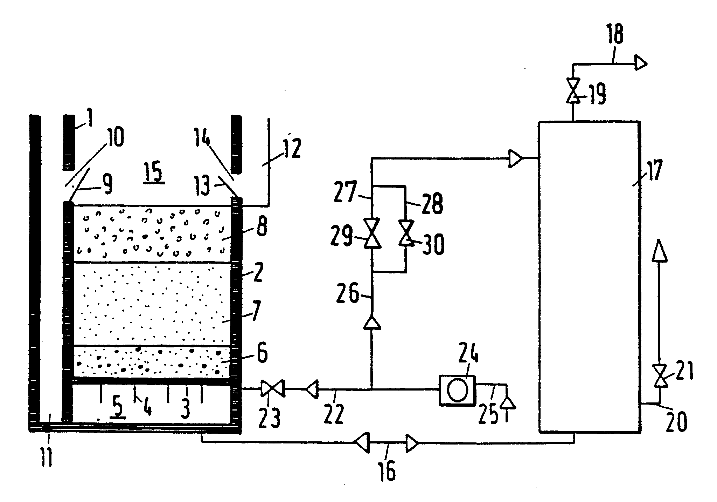

Im folgenden wird die Erfindung anhand eines Ausführungsbeispiels im Zusammenhang mit der Zeichnung näher erläutert.

Die einzige Figur zeigt schematisch eine Filteranlage, die mit dem neuen Leitungssystem für die Druckluft zum Antrieb der Spülwasserströmung ausgerüstet ist.

In der Figur sind im wesentlichen nur die für die Durchführung der Rückspülung notwendigen Anlageteile in rein schematischer Form angedeutet, ohne dass konstruktive Details der Baukörper, der Abflussorgane oder der wasserführenden Leitungen oder Kanäle wiedergegeben sind. Desgleichen ist das ganze Steuersytem für den Filtrations-und für den Rückspülprozess nicht dargestellt.

Von der Filteranlage, die mehrere Filterfelder 1 aufweisen kann, ist lediglich ein Filterfeld 1 dargestellt, das in einem Bauwerk 2, beispielsweise aus Beton, untergebracht ist. Es enthält einen Düsenboden 3, in den eine Reihe Düsen 4 eingesetzt sind, die in einen Reinwasserraum 5 ragen. Auf dem Düsenboden 3 lagern drei getrennte Schichten unterschiedlicher körniger Filtermaterialien, wobei die unterste Schicht 6 grobkörniger Kies mit einer Körnung von einigen Zentimeter Durchmesser ist; darüber ist als mittlere Schicht 7 Sand mit einer Körnung von einigen Millimetern Durchmesser angeordnet; die obere Abschlussschicht 8 des Filtermaterials besteht aus spezifisch relativ leichtem Bimsstein.

Unmittelbar oberhalb des Filtermaterials ist links eine Schlammwasserklappe 9 angeordnet, die eine Schlammwasser- Oeffnung 10 verschliesst, die ihrerseits zu einem Schlammwasserkanal 11 führt. An der rechten Seite des Bauwerks 2 ist ein Rohwasserkanal 12 angesetzt, der durch die von einer Rohwasserklappe 13 verschlossene Oeffnung 14 mit dem Ueberstauraum 15 des Filterfeldes 1 in Verbindung steht.

Der Reinwasserraum 5 ist über eine Leitung 16 mit einem Spülwasser-Reservoir 17 verbunden, aus dem oben eine zu den Verbrauchern führende Reinwasserleitung 18 wegführt, die mit Hilfe eines Absperrorgans 19 geschlossen werden kann. Unten am Reservoir 17 ist eine weitere Leitung 20, die durch ein Organ 21 verschliessbar ist, angeordnet; diese Leitung 20 dient zum Entleeren des Reservoirs 17, beispielsweise zur Reinigung.

An den Reinwasserraum 5 ist weiter eine Spülluftleitung 22 angeschlossen, die ein Absperrorgan 23 enthält und den Reinwasserraum 5 mit einem Gebläse 24 verbindet; dessen Luftansaugleitung ist mit 25 bezeichnet.

Aus der Leitung 22 zweigt eine Luftleitung 26 ab, die zum Spülwasser-Reservoir 17 führt. Die Luftleitung 26 ist auf einer Teilstrecke in zwei Leitungsabschnitte 27 und 28 unterteilt, deren jeder mit einem Auf/Zu-Absperrorgan 29 und 30 versehen ist.

Der Leitungsquerschnitt des als Bypass dargestellten Leitungsabschnittes 28 ist dabei wesentlich kleiner als derjenige des Hauptleitungsabschnittes 27; im vorliegenden Fall beträgt er beispielsweise nur etwa 3 % des Querschnittes der Hauptleitung.

Ein Rückspülvorgang läuft bei der neuen Anlagen beispielsweise wie folgt ab:

An dem zu spülenden Filterfeld 1 werden zunächst einerseits die Reinwasserleitung 18 mit Hilfe des Absperrorgans 19 und andererseits die Rohwasserklappe 13 geschlossen. Nach Oeffnen der Schlammwasserklappe 9 fliesst das "überschüssige" Rohwasser aus dem Ueberstauraum 15 ab. Nun werden für die erste Phase des Rückspülens, die sogenannte Luftspülung, das Gebläse 24 eingeschaltet und das Absperrorgan 23 in der Spülluftleitung 22 geöffnet. Mit einer Strömungsgeschwindigkeit von beispielsweise 80 m/h lockert die Luft die an den Filtermaterialien haftenden Schmutzteilchen, wobei die einzelnen Schichten 6 bis 8 aufgewirbelt und durchmischt werden.

Die in der ersten Phase "gelockerten" Schmutz- oder Feststoffteilchen werden in der nächsten Spülphase, die mit einem Luft/Wasser-Gemisch erfolgt, aus den körnigen Materialien des Filterbettes herausgespült. Während der Luftanteil des Luft/Wasser-Gemisches weiterhin durch die Leitung 22 in den Reinwasserraum 5 einströmt, wird ein geringer Anteil des Luftstromes durch Oeffnen des Organs 30 in der Bypassleitung 28 abgezweigt, um als Druckgaspolster das Spülwasser im Reservoir 17 zu überlagern; dieses Druckgaspolster fördert Spülwasser aus dem Reservoir 17 durch die Leitung 16 ebenfalls in den Raum 5, aus dem dann das Gemisch aus Luft und Wasser in das Filterfeld 1 von unten eintritt.

Die für den "Unterhalt" des Wasserflusses benötigte Luftmenge ist relativ gering, so dass die Luftmenge und -geschwindigkeit in der Leitung 22 durch die abgezweigte Teilmenge nur geringfügig verringert werden. Am Ende der Luft/Wasser-Phase werden die Schlammwasserklappe 9 und das Organ 23 in der Leitung 22 geschlossen.

Als Abschluss eines Rückspülvorganges erfolgt nunmehr in einer reinen Wasserphase ein Trennen und Entmischen der unterschiedlichen körnigen Filtermaterialien, um die drei getrennten Schichten 6 bis 8 wiederherzustellen. Für diese Entmischung sind hohe Wassergeschwindigkeiten - je nach Art der Materialien beispielsweise zwischen 40 und 150 m/h - erforderlich. Dementsprechend werden für die Förderung des Wassers aus dem Reservoir 17 grosse Luftmengen benötigt. Diese werden vom Gebläse 24 über die Leitung 26 und den Leitungsabschnitt 27 nach Oeffnen des Auf/Zu-Organs 29 - unter gleichzeitigem Schliessen des Leitungsquerschnittes 28 - oben in das Reservoir 17 gefördert, wo sie, ähnlich wie die in der vorhergehenden Phase in das Reservoir 17 geförderte Luft, den Antrieb für die Spülwasserströmung bildet.

Nach dem Entmischen und Absetzen der Filtermaterialien in den getrennten Schichten 6 bis 8 wird das für die Trennung benötigte Wasser durch kurzes Oeffnen der Schlammwasserklappe 9 abgelassen, womit die Rückspülung beendet ist. Durch Oeffnen der Organe 13 und 19 beginnt nunmehr wiederum der normale Filterbetrieb.

## Ansprüche

1. Rückspülbare Mehrschicht-Filteranlage zum Reinigen von Wasser oder Abwasser mit mindestens einem Filterfeld, das auf einem Filterboden körnige Filtermaterialien unterschiedlicher Grösse und Schwere enthält, ferner mit einer Spülvorrichtung zum Rückspülen mit Luft, einem Luft/Wasser-Gemisch und Wasser, und mit einer Druckluftquelle, die den Waserspiegel eines geschlossenen Spülwasser-Reservoirs belastet, für den Antrieb der Spülwasserströmung, dadurch gekennzeichnet, dass in die Luftleitung (26) zwischen Druckluftquelle (24) und Spülwasser-Reservoir (17), parallel zueinander, zwei Leitungsabschnitte (27,28) eingesetzt sind, in denen je ein AUF/ZU-Steuerorgan (29,30) vorhanden ist, und bei denen der Leitungsquerschnitt des einen Abschnitts (27) ein Vielfaches desjenigen des anderen Abschnitts (28) beträgt.

2. Filteranlage nach Anspruch 1, dadurch gekennzeichnet, dass der Querschnitt des einen Leitungsabschnittes (27) mindestens das Zehnfache desjenigen des anderen (28) beträgt.

3. Filteranlage nach Anpruch 1 oder 2, dadurch gekennzeichnet, dass die Luftleitung (26) mit Spülluft gespeist ist.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 016 843 (R. PIERPONT MOORE) * Seite 3, Zeilen 67-79 * --- | 1 | B 01 D 24/22 B 01 D 24/46 |
| A | DE-C- 512 390 (R. BREDE) * Seiten 1-2 * ----- | 1 | |

**RECHERCHIERTE SACHGEBIETE (Int. Cl.5)**

B 01 D

Der vorliegende Recherchenbericht wurde für alle Patentansprüche erstellt

| Recherchenort | Abschlußdatum der Recherche | Prüfer |
|---|---|---|
| DEN HAAG | 09-05-1990 | DE PAEPE P.F.J. |